# FASCICULE DE BREVET EUROPEEN

(11) **EP 3 698 301 B1**
(45) Date de publication et mention de la délivrance du brevet: **25.01.2023**
(21) Numéro de dépôt: 18778946.6
(22) Date de dépôt: 04.10.2018
(51) Int. Cl.: B60P 7/00, G06Q 10/08, G06Q 50/28, B60J 7/06

(54) **SYSTÈME ET PROCÉDÉ DE COMMANDE DE LA NAVIGATION D'UN VÉHICULE AUTOMOBILE MUNI D'UN SYSTÈME DE COUVERTURE AMOVIBLE**
SYSTEM UND VERFAHREN ZUR STEUERUNG DER NAVIGATION EINES KRAFTFAHRZEUGES MIT ABNEHMBAREM ABDECKSYSTEM
SYSTEM AND METHOD OF CONTROLLING THE NAVIGATION OF A MOTOR VEHICLE EQUIPPED WITH A REMOVABLE COVERING SYSTEM

(30) Priorité: 16.10.2017 FR 1759676
(43) Date de publication de la demande: 26.08.2020
(73) Titulaire: Innovaction Technologies, 42110 Epercieux St Paul (FR)
(72) Inventeur: SAJNOVIC, Srecko, 42300 Roanne (FR)
(74) Mandataire: Casalonga
(86) Numéro de dépôt international: PCT/EP2018/077003
(87) Numéro de publication internationale: WO 2019/076640

(56) Documents cités:
- EP-A1- 3 101 600
- FR-A1- 2 871 420
- US-A1- 2002 004 703
- US-A1- 2010 057 358
- US-A1- 2012 253 862
- US-A1- 2014 244 098
- US-A1- 2015 006 005
- US-A1- 2016 334 236

## Description

L'invention a pour domaine technique les systèmes de navigation pour véhicules, et notamment pour des véhicules de transport de marchandises.

La navigation d'un véhicule de transport repose traditionnellement sur un plan de route spécifiant au moins un lieu de chargement/déchargement ainsi que la route à suivre, et préparé pour chaque véhicule d'une flotte par un service logistique.

Avec l'avènement des systèmes de navigation routière, de tels systèmes ont évolué pour ne plus nécessiter que la saisie des lieux de chargement/déchargement, la route à suivre étant déterminée par le système de navigation routière embarqué.

Cependant, la modification du trajet ou des arrêts du véhicule implique une communication radiotéléphonique avec le chauffeur afin de lui communiquer un nouveau plan de route ou l'envoi électronique d'une nouvelle version du plan de route. Bien que fonctionnelle, cette méthode ne permet pas de communiquer avec le véhicule et de modifier aisément le plan de route du véhicule.

De plus, l'automatisation des premiers camions de transport laisse entrevoir la disparition progressive du conducteur. Dans un tel cas, il est nécessaire de disposer d'un système de navigation au moins partiellement automatisé permettant de modifier la destination du véhicule autonome.

Ainsi, il existe un besoin pour un système de navigation et de communication permettant une communication bidirectionnelle entre le véhicule et un site distant, de sorte que le plan de route puisse être modifié par le site distant en temps réel en fonction des données transmises par le véhicule relatives à son fonctionnement.

Il existe également un besoin pour une sécurisation des cargaisons et véhicules de transport vis-à-vis des vols ou de l'intrusion frauduleuse de cargaison ou d'individus à bord d'un véhicule à travers la surveillance du volume de la cargaison.

De l'état de la technique antérieure, on connaît les documents US 2014/244098 et FR2871420.

Le document US 2014/244098 divulgue un système de gestion d'un équipement minier comprenant un serveur distant, une communication sans fil et un dispositif de collecte d'information dans un camion de transport de vrac.

Le document FR2871420 divulgue un équipement de véhicule à réservoir et bouclier mobile alimentant une trémie, ayant pour but de vider une benne lorsque l'environnement ne permet pas de lever la benne pour que son contenu s'écoule sous l'effet de la gravité.

Aucun des ces documents ne résout le problème technique identifié plus haut.

L'invention a pour objet un système de commande de la navigation d'un véhicule automobile muni d'un système de couverture amovible en fonction de la cargaison transportée. Le système comprend un système de commande d'un véhicule et un site distant,
le système de commande comprenant
un premier moyen de comparaison, apte à comparer périodiquement un signal de position de la couverture amovible reçu d'un moyen de repérage de position de la couverture amovible à une valeur associée à une position de la couverture amovible,
un moyen de commande apte à émettre une requête de volume à destination d'un moyen de détermination du volume transporté en fonction d'une mesure de la masse du véhicule et de la masse volumique de la cargaison et/ou une requête de surface de plancher occupé par la cargaison à un moyen de calcul et une requête de position du véhicule à destination d'un dispositif de positionnement, la requête de volume et/ou de surface de plancher occupée sont émises à réception d'un signal du premier moyen de comparaison,
des moyens d'émission et de réception aptes à émettre le volume et /ou la surface de plancher déterminés et la position déterminée du véhicule à destination d'un site distant et aptes à recevoir au moins une requête de chargement d'une autre cargaison dudit site distant, comprenant au moins une position de l'autre cargaison à charger, une description du chargement de l'autre cargaison à charger et un volume et /ou la surface de plancher de l'autre cargaison à charger, et
des moyens d'affichage de la requête de chargement de l'autre cargaison à charger, et
le site distant étant muni de moyens de traitement et de mémorisation, apte à recevoir le volume et /ou la surface de plancher et la position déterminée du véhicule, aptes à recevoir au moins une requête de chargement de l'autre cargaison à charger à destination du véhicule, aptes à déterminer si le véhicule peut accepter la requête de chargement de l'autre cargaison à charger en fonction des spécifications du véhicule, de la position du véhicule et de la requête de chargement de l'autre cargaison à charger.

Les moyens d'affichage peuvent être un système d'aide à la navigation routière.

Le moyen de détermination du volume transporté peut comprendre un moyen de calcul et une mémoire, le moyen de calcul étant apte à communiquer avec un moyen d'estimation de la masse du véhicule,
à réception d'une requête de volume, le moyen de calcul étant apte à déterminer le volume de la cargaison présente dans le véhicule en réalisant la différence de la masse à vide du véhicule moins la masse du véhicule à réception de la requête, divisée par la masse volumique de la cargaison.

La masse volumique de la cargaison peut être prédéterminée en fonction des données de volume et de masse de la requête de chargement de l'autre cargaison à charger.

La masse à vide du véhicule peut être prédéterminée en fonction des spécifications du véhicule fournies par le fabricant.

La masse à vide du véhicule peut être déterminée par une mesure de masse du moyen d'estimation de la masse à un instant de référence, lorsque le véhicule ne transporte pas de cargaison.

Le site distant peut être apte à déterminer le volume disponible dans le véhicule en réalisant la différence entre le volume de cargaison du véhicule et le volume total de cargaison acceptable par le véhicule.

Le site distant peut être apte à déterminer si le volume de la requête de chargement de l'autre cargaison à charger est inférieur au volume disponible, si la somme de la masse à charger de l'autre cargaison à charger et de la masse du véhicule est inférieure à la masse totale en charge du véhicule, et lorsque le véhicule comprend au moins une cargaison, si la différence de distance entre la destination de l'autre cargaison à charger et la destination de la au moins une cargaison du véhicule est inférieure à un seuil de distance prédéterminé, et si toutes les conditions sont vérifiées, apte à transmettre la requête de chargement au véhicule.

La position de la couverture amovible peut être la position ouverte et/ou la position fermée.

L'invention a également pour objet un procédé de commande de la navigation d'un véhicule automobile muni d'un système de couverture amovible en fonction de la cargaison transportée en liaison avec un site distant. Le procédé comprend des étapes au cours desquelles :
au niveau du véhicule,
on détermine la position de la couverture amovible,
on détermine périodiquement si le signal de position de la couverture amovible correspond à une valeur associée à une position de la couverture amovible,
si tel est le cas, on détermine le volume transporté en fonction d'une mesure de la masse du véhicule et de la masse volumique de la cargaison et/ou la surface de plancher occupée par la cargaison ainsi que la position du véhicule,
on émet le volume et/ou la surface de plancher déterminés et la position déterminée du véhicule à destination d'un site distant, et
au niveau du site distant,
on reçoit le volume et/ou la surface de plancher et la position déterminée du véhicule,
on reçoit au moins une requête de chargement à destination du véhicule,
on détermine si le véhicule peut accepter la au moins une requête de chargement en fonction des spécifications du véhicule, de la position du véhicule et de la requête de chargement,
si tel est le cas, on transmet la au moins une requête de chargement au véhicule.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre les principaux éléments d'un système de couverture amovible, et
- la figure 2 illustre les principaux éléments d'un système de commande selon l'invention.

De l'état de la technique, on connaît la demande de brevet FR1457845 divulguant une couverture amovible pour benne de camion, permettant de couvrir ou de découvrir la benne ou la remorque d'un camion en entraînant des arceaux insérés dans une bâche de couverture. Les arceaux sont généralement supportés par un rail et fixés à un câble d'entraînement qui permet de les déplacer dans un sens ou dans l'autre sous l'action d'un moteur.

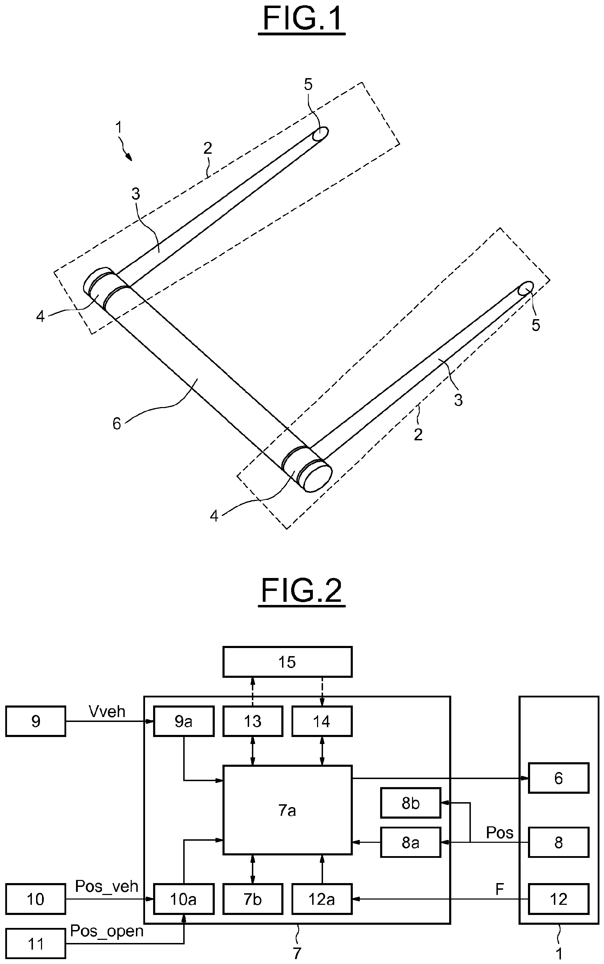

La figure 1 illustre un système de couverture amovible selon le document FR1457845. Le système de couverture amovible 1 comprend deux dispositifs de déplacement 2 comprenant chacun un câble d'entraînement 3 coopérant avec une partie d'une roue avant 4 et une roue arrière 5. Le câble d'entraînement 3 soutient des arceaux insérés dans une bâche. Un moteur 6 permet l'entraînement des câbles 3 par l'intermédiaire des roues avant 4. On notera que le moteur 6 et les roues avant 4 sont contenus dans un même élément. On citera comme exemple un cylindre muni de roues à ses extrémités et d'un moteur axial inséré dans son volume intérieur. Par leurs mouvements, les câbles d'entraînement 3 permettent de déplacer les arceaux et la bâche, couvrant ou découvrant la benne en fonction du sens de déplacement.

A la différence de l'état de la technique antérieur, un tel système de couverture amovible 1 permet d'éviter une perte de tension des câbles d'entraînement 3. Le système peut ainsi être automatisé sans surveillance particulière, à la différence des systèmes de l'art antérieur dont le déploiement ou le retrait devaient être surveillés. Le système de couverture automatique permet également une ouverture ou une fermeture de la couverture amovible en quelques secondes contre quelques dizaines de minutes pour les systèmes de l'état de l'art.

De plus, lorsqu'un système de couverture amovible est muni d'un moyen de repérage de position 8 de la couverture amovible, il est possible de déterminer l'état ouvert ou fermé de la couverture amovible, et de déterminer ainsi si un accès à la cargaison a pu avoir lieu. Un moyen de repérage de position 8 de la couverture amovible peut consister en l'association d'un onglet codeur et d'un détecteur correspondant, l'onglet codeur étant lié à la rotation du moteur ou d'une des roues coopérant avec le câble d'entraînement.

Enfin, la présence d'une couverture amovible permet de délimiter le volume du véhicule utilisable pour une cargaison et d'en effectuer la surveillance.

La figure 2 illustre le système de commande 7 selon l'invention.

Le système de commande 7 comprend un moyen de commande 7a apte à déclencher l'estimation du volume de la cargaison présente dans le véhicule dès que la couverture amovible est ouverte.

Pour réaliser cela, le système de commande 7 comprend un premier moyen de comparaison 8a, apte à comparer périodiquement le signal de position reçu d'un moyen de repérage de position 8 de la couverture amovible à une valeur associée à la position ouverte. Lorsque le signal de position correspond à la valeur associée à la position ouverte, le premier moyen de comparaison 8a émet un signal à destination du moyen de commande 7a.

Le moyen de commande 7a émet alors une requête d'estimation de volume à destination du moyen de détermination du volume transporté 9, qui renvoie en retour une valeur du volume de la cargaison dans le véhicule.

On peut voir que le système de commande 7 comprend également un moyen de détermination du volume transporté 9 par le véhicule, apte à déterminer le volume de la cargaison présente dans le véhicule.

Dans un mode de réalisation, le moyen de détermination du volume transporté 9, comprend un moyen de calcul 9a et une mémoire 9b, le moyen de calcul 9a étant apte à communiquer avec un moyen d'estimation 12 de la masse du véhicule

Le moyen d'estimation 12 de la masse du véhicule permet de déterminer la masse du véhicule en fonction d'un modèle dépendant généralement de la force de traction et de la vitesse ou de l'accélération subie par le véhicule. Par application de l'équation générale de la mécanique (ΣF=ma avec F les forces appliquées au véhicule et a l'accélération subie par le véhicule), il est possible de déterminer la masse du véhicule.

Le moyen de calcul 9a requiert une mesure de masse du moyen d'estimation 12 de la masse à un instant de référence, lorsque le véhicule ne transporte pas de cargaison. Cela est généralement réalisé en fonction du plan de route (notamment lors du déchargement complet, ou de l'attelage d'une remorque vide). Dans un mode de réalisation alternatif, la masse du véhicule peut être prédéterminée, par exemple en accord avec les spécifications du fabriquant, et mémorisée dans la mémoire 9b.

A réception d'une requête de volume, le moyen de calcul 9a requiert une mesure de la masse du véhicule.

Le moyen de calcul 9a détermine alors le volume de la cargaison en réalisant la différence de la masse à vide moins la masse du véhicule à réception de la requête, divisée par la masse volumique de la cargaison.

La masse volumique de la cargaison peut être prédéterminée, par exemple pour un camion minier transportant toujours la même cargaison en vrac ou être reçue du site distant 15. Dans ce dernier cas, la masse volumique est estimée en fonction des données de volume et de masse transmises par le client (Masse totale, conditionnement unitaire,....).

Dans un mode de réalisation, lorsque le moyen de commande 7a reçoit un signal indiquant que la couverture amovible est en position ouverte, le moyen de commande 7a émet alors une requête d'estimation de la surface de plancher occupée par la cargaison. Un moyen de calcul muni d'une mémoire détermine alors la surface de plancher occupée par la cargaison en fonction de la surface totale de plancher pour la cargaison disponible dans le véhicule, de la surface occupée par la cargaison déchargée et/ou de la surface occupée par la cargaison chargée et de la surface occupée par les autres cargaisons dans le véhicule.

A réception du signal du premier moyen de comparaison 8a, le moyen de commande 7a émet également une requête de position à destination d'un dispositif de positionnement 10. Le dispositif de positionnement 10 émet en retour un signal portant la position du véhicule Pos_veh.

Apres détermination du volume du chargement et/ou de la surface de plancher occupée par la cargaison et de la position du véhicule, le moyen de commande 7a transmet ces informations à des moyens d'émission et de réception 13,14 afin de les transmettre à un site distant 15.

Le site distant 15 comprend des moyens de réception et d'émission aptes à coopérer avec les moyens d'émission et de réception 13,14 du véhicule, au moins un moyen de traitement, tel qu'au moins un processeur associé à de la mémoire vive et/ou non volatile, et connecté à au moins un réseau de données, notamment Internet, par tout protocole adapté et à au moins un moyen de stockage de données (par exemple, au moins un disque dur ou un disque statique de type SSD, « Solid State Device »).

Le site distant 15 reçoit ainsi les données de position, de volume de chargement et/ou de surface de plancher occupé par le chargement à chaque ouverture de la couverture amovible pour chaque véhicule dont il reçoit des données et est apte à générer pour chaque véhicule une carte associant le positionnement et le volume du chargement du véhicule lors de la dernière ouverture de la couverture mobile.

Les moyens de traitement du site distant 15 sont ainsi aptes à connaître la localisation et la capacité restante du véhicule et à générer une carte indiquant la localisation et la capacité du véhicule. Par capacité restante, on entend le volume ou la surface de plancher disponible dans le véhicule pour recevoir une cargaison. La capacité restante peut être déterminée par les moyens de traitement en soustrayant le volume du chargement reçu du véhicule et la capacité totale du véhicule mémorisée ou en soustrayant la surface de plancher occupée par le chargement reçu du véhicule et la surface de plancher totale du véhicule.

Dans le cas particulier du volume disponible, il est à noter qu'il peut être appréhendé différemment selon qu'il s'agit de matériaux en vrac ou de marchandises conditionnées (cartons, palettes). En effet, dans le premier cas, d'autres matériaux peuvent être ajoutés à une cargaison existante que si les caractéristiques de la cargaison ajoutée correspondent aux caractéristiques de la cargaison existante. En effet, une fois ajoutées, les deux cargaisons ne peuvent plus être différenciées. Une telle situation n'est pas préjudiciable dans le cas par exemple de l'évacuation de gravas depuis des sites de démolition ou d'excavation à destination d'un site de stockage ou de traitement. Par contre, le transport en vrac de matières premières (charbon, blé, produits chimiques, ..) de cette manière peut être préjudiciable dans le cas où les ajouts ne sont pas de la même qualité (pureté, degré de maturité, ...) que la cargaison initiale.

Dans le cas de marchandises conditionnées, les chargements peuvent être ajoutés dans un même véhicule. En effet, le conditionnement de ces marchandises comprend généralement un moyen d'identification de la marchandise permettant de réaliser leur suivi, et son généralement conditionnées en palettes.

Le site distant 15 est alors apte à publier la carte ainsi déterminée à au moins un utilisateur par le biais du réseau de données, de préférence Internet. L'utilisateur peut consulter la carte soit par l'intermédiaire d'un navigateur internet et d'une page internet adéquate, soit par l'intermédiaire d'une application mobile.

Dans un mode de réalisation, l'utilisateur peut se voir autorisé à interagir avec un véhicule à travers le site distant 15 pour programmer un arrêt de chargement/déchargement, associé à au moins un volume ou une surface de plancher de cargaison et à la destination du véhicule. L'autorisation de l'utilisateur peut varier d'un véhicule à un autre, ne concerner que le chargement ou que le déchargement.

A réception des informations de chargement/déchargement comprenant la localisation de la cargaison, le volume ou la surface et la masse de la cargaison et sa destination, le site distant 15 détermine si ces informations sont compatibles avec le véhicule choisi. Pour réaliser cela, on détermine si la masse et le volume ou la surface de la cargaison peuvent être acceptés par le véhicule, en tenant compte des cargaisons en cours de transport. On détermine également si la destination de la cargaison se situe à une distance acceptable des autres cargaisons à livrer ou à charger. Ainsi, on s'assure que le véhicule ne fait pas des détours trop importants. Si ces vérifications sont validées, le site distant 15 transmet les informations au véhicule concerné par l'intermédiaire des moyens de réception et d'émission.

Le moyen de commande 7a reçoit les données de la requête de chargement par l'intermédiaire des moyens d'émission et de réception 13,14, et les transmet à des moyens d'affichage de sorte que l'opérateur soit informé de la nouvelle destination de son véhicule, de la cargaison à récupérer, du lieu de livraison de la cargaison et éventuellement. Dans un mode de réalisation particulier, les moyens d'affichage sont un système d'aide à la navigation routière 11 permettant d'afficher les informations de la requête de chargement et de déterminer le trajet à suivre pour atteindre la position du chargement comprise dans la requête.

A partir des données de volume et de position transmises par le système de commande, le site distant 15 peut également déterminer que la cargaison prévue dans le plan de route du véhicule a bien été chargée ou déchargée et qu'aucune cargaison imprévue a été chargée ou déchargée.

Le site distant 15 peut ainsi prévenir le vol de marchandise, l'intrusion de personnes à bord, ou le détournement du camion pour des transports non autorisés.

Dans un mode de réalisation particulier, le moyen de commande 7a peut joindre aux données transmises l'itinéraire parcouru par le véhicule depuis la précédente ouverture de la couverture amovible. L'itinéraire comprend une succession de positions reçues du dispositif de positionnement 10, collectées par le moyen de commande 7a avec leurs dates de collecte, en attente de l'émission suivante. Par date de collecte, on entend le jour, le mois, l'année, l'heure, la minute, la seconde ou la fraction de seconde correspondant à la détermination de la position par le dispositif de positionnement 10. La précision peut être choisie en fonction de la périodicité d'émission des requêtes par le moyen de commande 7a, et la précision requise sur l'itinéraire du véhicule.

En plus de la surveillance du volume de cargaison du véhicule pour détecter d'éventuelles effractions en entrée ou en sortie du véhicule, il est ainsi possible de corréler les variations de masse avec une divergence entre l'itinéraire prévu et l'itinéraire réalisé entre deux ouvertures de la couverture amovible.

Par opérateur, on entend le conducteur du véhicule traditionnel, le conducteur à distance du véhicule piloté comme un drone, le programme ou le système de pilotage du véhicule lorsque celui-ci est autonome ou semi-autonome.

La description ci-dessus a été réalisée en considérant l'ouverture de la couverture amovible comme l'événement déclencheur de la détermination de volume et de communication avec le site distant 15.

Toutefois, il est possible de considérer la fermeture de la couverture amovible comme évènement déclencheur, ou de considérer l'ouverture et la fermeture comme des événements déclencheurs. Cette dernière alternative permet bien évidement d'obtenir un plus haut niveau de suivi et de sécurité.

## Revendications

1. Système de commande de la navigation d'un véhicule automobile muni d'un système de couverture amovible en fonction de la cargaison transportée, **caractérisé par le fait qu'**il comprend :
un système de commande (7) d'un véhicule et un site distant (15),
le système de commande (7) comprenant
un premier moyen de comparaison (8a), apte à comparer périodiquement un signal de position de la couverture amovible reçu d'un moyen de repérage de position (8) de la couverture amovible à une valeur associée à une position de la couverture amovible,
un moyen de commande (7a) apte à émettre une requête de volume à destination d'un moyen de détermination du volume transporté (9) en fonction d'une mesure de la masse du véhicule et de la masse volumique de la cargaison et/ou une requête de surface de plancher occupé par la cargaison à un moyen de calcul et une requête de position du véhicule à destination d'un dispositif de positionnement (10), la requête de volume et/ou de surface de plancher occupée sont émises à réception d'un signal du premier moyen de comparaison (8a),
des moyens d'émission et de réception (13,14) aptes à émettre le volume et/ou la surface de plancher déterminés et la position déterminée du véhicule à destination d'un site distant (15) et aptes à recevoir au moins une requête de chargement d'une autre cargaison dudit site distant (15), comprenant au moins une position de l'autre cargaison à charger, une description de l'autre cargaison à charger et un volume et/ou la surface de plancher de l'autre cargaison à charger, et
des moyens d'affichage de la requête de chargement de l'autre cargaison à charger, et
le site distant (15) étant muni de moyens de traitement et de mémorisation, aptes à recevoir le volume et/ou la surface de plancher et la position déterminée du véhicule, aptes à recevoir au moins une requête de chargement de l'autre cargaison à charger à destination du véhicule, aptes à déterminer si le véhicule peut accepter la requête de chargement de l'autre cargaison à charger en fonction des spécifications du véhicule, de la position du véhicule et de la requête de chargement de l'autre cargaison à charger.

2. Système de commande selon la revendication 1, dans lequel les moyens d'affichage sont un système d'aide à la navigation routière (11).

3. Système de commande selon l'une quelconque des revendications précédentes, dans lequel le moyen de détermination du volume transporté (9), comprend un moyen de calcul (9a) et une mémoire (9b), le moyen de calcul (9a) étant apte à communiquer avec un moyen d'estimation (12) de la masse du véhicule,
à réception d'une requête de volume, le moyen de calcul (9a) étant apte à déterminer le volume de la cargaison présente dans le véhicule en réalisant la différence de la masse à vide du véhicule moins la masse du véhicule à réception de la requête, divisée par la masse volumique de la cargaison.

4. Système de commande selon la revendication 3, dans lequel la masse volumique de la cargaison est prédéterminée en fonction des données de volume et de masse de la requête de chargement de l'autre cargaison à charger.

5. Système de commande selon l'une quelconque des revendications précédentes, dans lequel la masse à vide du véhicule est prédéterminée en fonction des spécifications du véhicule fournies par le fabricant.

6. Système de commande selon l'une quelconque des revendications 1 à 4, dans lequel la masse à vide du véhicule est déterminée par une mesure de masse du moyen d'estimation (12) de la masse à un instant de référence, lorsque le véhicule ne transporte pas de cargaison.

7. Système de commande selon l'une quelconque des revendications précédentes, dans lequel le site distant (15) est apte à déterminer le volume disponible dans le véhicule en réalisant la différence entre le volume de cargaison du véhicule et le volume total de cargaison acceptable par le véhicule.

8. Système de commande selon l'une quelconque des revendications précédentes, dans lequel le site distant (15) est apte à déterminer si le volume de la requête de chargement de l'autre cargaison à charger est inférieur au volume disponible, si la somme de la masse de l'autre cargaison à charger à charger et de la masse du véhicule est inférieure à la masse totale en charge du véhicule, et lorsque le véhicule comprend au moins une cargaison, si la différence de distance entre la destination de l'autre cargaison à charger et la destination de la au moins une cargaison du véhicule est inférieure à un seuil de distance prédéterminé, et, si toutes les conditions sont vérifiées, apte à transmettre la requête de chargement au véhicule.

9. Système de commande selon l'une quelconque des revendications précédentes, dans lequel la position de la couverture amovible est la position ouverte et/ou la position fermée.

10. Procédé de commande de la navigation d'un véhicule automobile muni d'un système de couverture amovible en fonction de la cargaison transportée en liaison avec un site distant, **caractérisé par le fait qu'**il comprend des étapes au cours desquelles :
au niveau du véhicule,
on détermine la position de la couverture amovible,
on détermine périodiquement si le signal de position de la couverture amovible correspond à une valeur associée à une position de la couverture amovible,
si tel est le cas, on détermine le volume transporté en fonction d'une mesure de la masse du véhicule et de la masse volumique de la cargaison et/ou la surface de plancher occupé par la cargaison ainsi que la position du véhicule,
on émet le volume et/ou la surface de plancher déterminés et la position déterminée du véhicule à destination d'un site distant, et
au niveau du site distant,
on reçoit le volume et/ou la surface de plancher et la position déterminées du véhicule,
on reçoit au moins une requête de chargement à destination du véhicule,
on détermine si le véhicule peut accepter la au moins une requête de chargement en fonction des spécifications du véhicule, de la position du véhicule et de la requête de chargement,
si tel est le cas, on transmet la au moins une requête de chargement au véhicule.

## Patentansprüche

1. Steuerungssystem der Navigation eines Kraftfahrzeugs, ausgestattet mit einem Abdeckungssystem, das in Abhängigkeit der beförderten Ladung abnehmbar ist, **dadurch gekennzeichnet, dass** es umfasst:
ein Steuerungssystem (7) eines Fahrzeugs und einen entfernten Standort (15),
wobei das Steuerungssystem (7) umfasst
ein erstes Vergleichsmittel (8a), geeignet, um periodisch ein Positionssignal der abnehmbaren Abdeckung, das von einem Registriermittel der Position (8) der abnehmbaren Abdeckung empfangen wurde, mit einem Wert zu vergleichen, der einer Position der abnehmbaren Abdeckung zugeordnet ist,
ein Steuerungsmittel (7a), geeignet, um eine Volumenanfrage an ein Mittel zur Bestimmung des beförderten Volumens (9) zu senden, auf der Grundlage einer Messung der Masse des Fahrzeugs und der Dichte der Ladung, und/oder eine Anfrage der von der Ladung beanspruchten Grundfläche an ein Berechnungsmittel und
eine Anfrage der Position des Fahrzeugs an eine Positionierungseinrichtung (10), wobei die Anfrage des Volumens und/oder der beanspruchten Grundfläche bei Empfang eines Signals des ersten Vergleichsmittels (8a) gesendet wird,
Sende- und Empfangsmittel (13, 14), geeignet, um das bestimmte Volumen und/oder die bestimmte Grundfläche und die bestimmte Position des Fahrzeugs an einen entfernten Standort (15) zu senden und geeignet, um mindestens eine Anfrage der Beladung einer anderen Ladung des entfernten Standorts (15) zu empfangen, die mindestens eine Position der anderen zu ladenden Ladung, eine Beschreibung der anderen zu ladenden Ladung und ein Volumen und/oder die Grundfläche der anderen zu ladenden Ladung umfasst, und Mittel zum Anzeigen der Anfrage der Beladung der anderen zu ladenden Ladung, und
den entfernten Standort (15), der mit Verarbeitungs- und Speichermitteln ausgestattet ist, geeignet, um das Volumen und/oder die Grundfläche und die bestimmte Position des Fahrzeugs zu empfangen, geeignet, um mindestens eine Anfrage der Beladung der anderen zu ladenden Ladung an das Fahrzeug zu empfangen, geeignet, um zu bestimmen, ob das Fahrzeug die Anfrage der Beladung der anderen zu ladenden Ladung auf der Grundlage der Fahrzeugspezifikationen, der Position des Fahrzeugs und der Anfrage der Beladung der anderen zu ladenden Ladung akzeptieren kann.

2. Steuerungssystem nach Anspruch 1, wobei die Anzeigemittel ein Hilfssystem der Straßennavigation (11) sind.

3. Steuerungssystem nach einem der vorhergehenden Ansprüche, wobei das Mittel zur Bestimmung des beförderten Volumens (9) ein Berechnungsmittel (9a) und einen Speicher (9b) umfasst, wobei das Berechnungsmittel (9a) geeignet ist, mit einem Mittel zur Schätzung (12) der Masse des Fahrzeugs zu kommunizieren,
bei Empfang einer Anfrage des Volumens, das Berechnungsmittel (9a), geeignet, um das Volumen der im Fahrzeug vorhandenen Ladung zu bestimmen, indem die Differenz der Leermasse des Fahrzeugs abzüglich der Masse des Fahrzeugs bei Empfang der Anfrage erstellt wird, dividiert durch die Dichte der Ladung.

4. Steuerungssystem nach Anspruch 3, wobei die Dichte der Ladung auf der Grundlage der Volumen- und Massendaten der Anfrage der Beladung der anderen zu ladenden Ladung vorbestimmt wird.

5. Steuerungssystem nach einem der vorhergehenden Ansprüche, wobei die Leermasse des Fahrzeugs auf der Grundlage der vom Hersteller bereitgestellten Fahrzeugspezifikationen vorbestimmt wird.

6. Steuerungssystem nach einem der Ansprüche 1 bis 4, wobei die Leermasse des Fahrzeugs durch eine Messung der Masse des Mittels zur Schätzung (12) der Masse zu einem Referenzzeitpunkt bestimmt wird, wenn das Fahrzeug keine Ladung befördert.

7. Steuerungssystem nach einem der vorhergehenden Ansprüche, wobei der entfernte Standort (15) geeignet ist, das im Fahrzeug verfügbare Volumen zu bestimmen, indem die Differenz zwischen dem Volumen der Ladung des Fahrzeugs und dem für das Fahrzeug akzeptierbaren Gesamtvolumen der Ladung erstellt wird.

8. Steuerungssystem nach einem der vorhergehenden Ansprüche, wobei der entfernte Standort (15) geeignet ist, zu bestimmen, ob das Volumen der Anfrage der Beladung der anderen zu ladenden Ladung kleiner ist als das verfügbare Volumen, ob die Summe der Masse der anderen zu ladenden Ladung und der Masse des Fahrzeugs kleiner ist als die vom Fahrzeug aufgenommene Gesamtmasse, und, wenn das Fahrzeug mindestens eine Ladung umfasst, ob die Differenz der Distanz zwischen dem Bestimmungsort der anderen zu ladenden Ladung und dem Bestimmungsort der mindestens einen Ladung des Fahrzeugs kleiner ist als ein vorbestimmter Schwellenwert der Distanz, und, wenn alle Bedingungen geprüft sind, geeignet ist, die Anfrage der Beladung an das Fahrzeug zu übermitteln.

9. Steuerungssystem nach einem der vorhergehenden Ansprüche, wobei die Position der abnehmbaren Abdeckung die offene Position und/oder die geschlossene Position ist.

10. Steuerungsverfahren der Navigation eines Kraftfahrzeugs, ausgestattet mit einem Abdeckungssystem, das in Abhängigkeit der beförderten Ladung abnehmbar ist, in Verbindung mit einem entfernten Standort, **dadurch gekennzeichnet, dass** es Schritte umfasst, bei denen:
im Bereich des Fahrzeugs,
die Position der abnehmbaren Abdeckung bestimmt wird, periodisch bestimmt wird, ob das Positionssignal der abnehmbaren Abdeckung einem Wert entspricht, der einer Position der abnehmbaren Abdeckung zugeordnet ist,
wenn dies der Fall ist, das beförderte Volumen auf der Grundlage einer Messung der Masse des Fahrzeugs und der Dichte der Ladung und/oder der von der Ladung beanspruchten Grundfläche sowie der Position des Fahrzeugs bestimmt wird,
das bestimmte Volumen und/oder die bestimmte Grundfläche und die bestimmte Position des Fahrzeugs an einen entfernten Standort gesendet werden, und
im Bereich des entfernten Standorts,
das Volumen und/oder die bestimmte Grundfläche und die bestimmte Position des Fahrzeugs empfangen werden, mindestens eine Anfrage der Beladung an das Fahrzeug empfangen wird,
bestimmt wird, ob das Fahrzeug die mindestens eine Anfrage der Beladung auf der Grundlage der Fahrzeugspezifikationen, der Position des Fahrzeugs und der Anfrage der Beladung akzeptieren kann,
wenn dies der Fall ist, die mindestens eine Anfrage der Beladung an das Fahrzeug übermittelt wird.

## Claims

1. A system for controlling the navigation of an automobile vehicle provided with a removable cover system depending on the transported cargo, **characterised in that** it comprises:
a vehicle control system (7) and a remote site (15),
the control system (7) comprising
a first comparison means (8a), capable of periodically comparing a position signal of the removable cover received from a means for locating (8) the position of the removable cover to a value associated with a position of the removable cover,
a control means (7a) capable of transmitting a volume request to means for determining the transported volume (9) depending on a measurement of the vehicle mass and the density of the cargo and/or a request for the floor surface area occupied by the cargo to a calculation means and a request for the position of the vehicle to a positioning device (10), the volume request and/or the request for the occupied floor surface area are transmitted upon receiving a signal from the first comparison means (8a),
transceiving means (13, 14) capable of transmitting the volume and/or floor surface area determined and the position determined of the vehicle to a remote site (15) and capable of receiving at least one request for loading another cargo from said remote site (15), comprising at least one position of the other cargo to be loaded, a description of the other cargo to be loaded and a volume and/or floor surface area of the other cargo to be loaded, and
means for displaying the request for loading the other cargo to be loaded, and
the remote site (15) being provided with processing and storage means, capable of receiving the volume and/or floor surface area and the position determined of the vehicle, capable of receiving at least one request for loading the other cargo to be loaded to the vehicle, capable of determining whether the vehicle can accept the request for loading the other cargo to be loaded depending on specifications of the vehicle, the position of the vehicle and the request for loading the other cargo to be loaded.

2. The control system according to claim 1, wherein the display means are a road navigation aid system (11).

3. The control system according to any of the preceding claims, wherein the means for determining (9) the transported volume, comprises a calculation means (9a) and a memory (9b), the calculation means (9a) being capable of communicating with a means for estimating (12) the vehicle mass,
upon receiving a volume request, the calculation means (9a) being capable of determining the volume of the cargo present in the vehicle by calculating the empty mass of the vehicle minus the mass of the vehicle upon receiving the request, divided by the density of the cargo.

4. The control system according to claim 3, wherein the density of the cargo is predetermined depending on the volume and mass data of the request for loading the other cargo to be loaded.

5. The control system according to any of the preceding claims, wherein the empty mass of the vehicle is predetermined depending on specifications of the vehicle supplied by the manufacturer.

6. The control system according to any of claims 1 to 4, wherein the empty mass of the vehicle is determined by a mass measurement of the means for estimating (12) the mass at a reference time instant, when the vehicle does not transport any cargo.

7. The control system according to any of the preceding claims, wherein the remote site (15) is capable of determining the available volume in the vehicle by calculating the difference between the cargo volume of the vehicle and the total cargo volume acceptable by the vehicle.

8. The control system according to any of the preceding claims, wherein the remote site (15) is capable of determining whether the volume of the request for loading the other cargo to be loaded is less than the available volume, whether the sum of the mass of the other cargo to be loaded and the mass of the vehicle is less than the gross mass of the vehicle, and when the vehicle comprises at least one cargo, whether the distance difference between the destination of the other cargo to be loaded and the destination of the at least one cargo of the vehicle is less than a predetermined distance threshold, and, if all the conditions are met, capable of transmitting the loading request to the vehicle.

9. The control system according to any of the preceding claims, wherein the position of the removable cover is the open position and/or the closed position.

10. A method for controlling the navigation of an automobile vehicle provided with a removable cover system depending on the transported cargo in connection with a remote site, **characterised in that** it comprises steps during which:
at the vehicle,
the position of the removable cover is determined,
whether the position signal of the removable cover corresponds to a value associated with a position of the removable cover is determined,
if yes, the transported volume is determined depending on a measurement of the mass of the vehicle and the density of the cargo and/or the floor surface area occupied by the cargo as well as the position of the vehicle,
the volume and/or floor surface area determined and the position determined of the vehicle are transmitted to a remote site, and
at the remote site,
the volume and/or floor surface area determined and the position determined of the vehicle are received,
at least one loading request for the vehicle is received, whether the vehicle can accept the at least one loading request is determined depending on specifications of the vehicle, the position of the vehicle and the loading request,
if yes, the at least one loading request is transmitted to the vehicle.
